# EUROPÄISCHE PATENTANMELDUNG

(11) **EP 2 631 683 A2**
(43) Veröffentlichungstag der Anmeldung: **28.08.2013**
(21) Anmeldenummer: 13152365.6
(22) Anmeldetag: 23.01.2013
(51) Int. Cl.: G01V 8/20

(54) **Lichtvorhang**

(30) Priorität: 21.02.2012 DE 102012101368
(71) Anmelder: Leuze electronic GmbH + Co KG, 73277 Owen/Teck (DE)
(72) Erfinder: Müller Dr., Bernhard, 71083 Herrenberg (DE); Mück, Armin, 72124 Pliezhausen (DE); Schedlberger, Robert, 4283 Bad Zell (AT); Schönleitner, Arnold, 3002 Purkersdorf (AT)
(74) Vertreter: Ruckh, Rainer Gerhard

(57) **Zusammenfassung**

Die Erfindung betrifft einen Lichtvorhang 1 zur Erfassung von Objekten innerhalb eines Überwachungsbereichs. Der Lichtvorhang 1 weist eine Anordnung von Lichtstrahlen 4 emittierenden Sendern 5, eine Anordnung von Lichtstrahlen 4 empfangenden Empfängern 6 und eine Auswerteeinheit auf. In der Auswerteeinheit werden in Abhängigkeit von Empfangssignalen an den Ausgängen von Empfängern 6 Objektfeststellungssignale generiert. Der Lichtvorhang 1 ist unterteilt in Bereiche mit jeweils einer vorgegebenen Anzahl von Sendern 5 und Empfängern 6. Die einzelnen Bereiche sind durch separate Parametrierungen individuell einstellbar. Für die einzelnen Bereiche erfolgt in der Auswerteeinheit eine separate Auswertung.

## Beschreibung

Die Erfindung betrifft einen Lichtvorhang gemäß dem Oberbegriff des Anspruchs 1.

Derartige Lichtvorhänge dienen allgemein zur Erfassung von Objekten in einem Überwachungsbereich und umfassen eine Sendereinheit mit einer Anordnung von Lichtstrahlen emittierenden Sendern und eine Empfängereinheit mit einer Anordnung von Lichtstrahlen empfangenden Empfängern. Die Sender - und Empfängereinheit sind an gegenüberliegenden Rändern des Überwachungsbereichs so angeordnet, dass bei freiem Überwachungsbereich die Lichtstrahlen eines Senders auf einen zugeordneten, gegenüberliegenden Empfänger treffen. Dieses Sender-/Empfängerpaar bildet eine Strahlachse des Lichtvorhangs. Die einzelnen Strahlachsen des Lichtvorhangs werden zyklisch einzeln nacheinander aktiviert. Hierzu ist in der Sendereinheit eine Steuereinheit integriert, die ein Schieberegister so ansteuert, dass damit die Sender zyklisch einzeln nacheinander aktiviert werden. In der Empfängereinheit ist eine Auswerteeinheit integriert, die ein weiteres Schieberegister so ansteuert, dass damit die Empfänger einzeln nacheinander aktiviert werden. Die Aktivierung der Sender und Empfänger wird auf optischem Wege oder elektrisch synchronisiert. Durch diese Synchronisation werden die einzelnen Sender-/Empfängerpaare des Lichtvorhangs zyklisch einzeln nacheinander aktiviert.

Zur Generierung eines Objektfeststellungssignals in Form eines binären Schaltsignals erfolgt in der Auswerteeinheit mittels eines oder mehrerer Schwellwerte eine Amplitudenbewertung der Empfangssignale. Innerhalb eines Zyklus, bei welchem alle Sender-/Empfängerpaare nacheinander aktiviert werden, wird geprüft, ob wenigstens die Lichtstrahlen einer Strahlachse unterbrochen sind. Ist dies der Fall, wird von der Auswerteeinheit als Schaltsignalzustand eine Objektmeldung ausgegeben. Ist keine der Strahlachsen unterbrochen, wird als Schaltsignalzustand ein freier Überwachungsbereich gemeldet.

Ein wesentlicher Nachteil derartiger Lichtvorhänge besteht darin, dass die Auswertung auf eine bloße Anwesenheitskontrolle beschränkt ist. Komplexere Auswertungen, insbesondere ortsaufgelöste Auswertungen, sind nur in eingeschränktem Umfang möglich.

Der Erfindung liegt die Aufgabe zugrunde, einen Lichtvorhang der eingangs genannten Art bereitzustellen, welcher bei geringem konstruktiven Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft einen Lichtvorhang zur Erfassung von Objekten innerhalb eines Überwachungsbereichs. Der Lichtvorhang weist eine Anordnung von Lichtstrahlen emittierenden Sendern, eine Anordnung von Lichtstrahlen empfangenden Empfängern und eine Auswerteeinheit auf. In der Auswerteeinheit werden in Abhängigkeit von Empfangssignalen an den Ausgängen von Empfängern Objektfeststellungssignale generiert. Der Lichtvorhang ist unterteilt in Bereiche mit jeweils einer vorgegebenen Anzahl von Sendern und Empfängern. Die einzelnen Bereiche sind durch separate Parametrierungen individuell einstellbar. Für die einzelnen Bereiche erfolgt in der Auswerteeinheit eine separate Auswertung.

Die einzelnen Bereiche des Lichtvorhangs bilden einzelne, vollständig funktionsfähige logische Lichtvorhang-Einheiten, in welchen jeweils eine separate, eigenständige Objektdetektion möglich ist. Im Unterschied zu mehreren, physikalisch getrennten Lichtvorhängen weist der erfindungsgemäße Lichtvorhang einen erheblich einfacheren und kostengünstigeren Aufbau auf, da für die einzelnen logischen Lichtvorhang-Einheiten nur eine Auswerteeinheit und auch weitere Sensorkomponenten und Gehäuseanordnungen gemeinsam genutzt werden können.

Ein wesentlicher Vorteil der Erfindung besteht darin, dass die einzelnen Bereiche des Lichtvorhangs separat und damit in unterschiedlicher Weise parametriert werden können, so dass die einzelnen Bereiche an unterschiedliche Applikationsbedingungen angepasst werden können. Auch die Art der Signalauswertung kann für die einzelnen Bereiche unterschiedlich ausgebildet und so an unterschiedliche Applikationsbedingungen angepasst werden.

Durch die individuelle Parametrierung, insbesondere durch Vorgabe unterschiedlicher Ansprechempfindlichkeiten der Empfänger, sowie eine daran angepasste Auswertung können die unterschiedlichen Bereiche dazu genutzt werden, um unterschiedliche Objektstrukturen jeweils mit einer hohen Nachweisempfindlichkeit detektieren zu können.

Vorteilhaft sind die Anzahl und die Größen der Bereiche variierbar.

Somit können die Bereiche auch hinsichtlich Anzahl und Größe an unterschiedliche Applikationsbedingungen angepasst werden.

Die Anpassung der Bereiche sowie deren Parametrierung und Auswertungsmodus kann vorzugsweise in einem Konfigurationsvorgang vor einer Inbetriebnahme des Lichtvorhangs erfolgen. Dies ermöglicht dem Anwender eine einfache und schnelle Einstellung des Lichtvorhangs und dessen Anpassung an unterschiedliche Applikationen.

Gemäß einer vorteilhaften Ausführungsform der Erfindung werden in der Auswerteeinheit für einzelne Bereiche separate Objektfeststellungssignale generiert.

Die einzelnen Bereiche bilden somit völlig eigenständige Lichtvorhang-Einheiten, in denen jeweils eine separate Objekterfassung erfolgt und abhängig hiervon separate Objektmeldungen erfolgen. Die Objektfeststellungssignale können für die einzelnen Bereiche gleich oder unterschiedlich ausgebildet sein. So kann das Objektfeststellungssignal eines oder mehrerer Bereiche als binäres Schaltsignal ausgebildet sein, mit dem eine bloße Anwesenheit eines Objekts im jeweiligen Bereich gemeldet wird. Weiterhin kann das Objektfeststellungssignal auch weitergehende Informationen wie Größe und Position des Objekts liefern. Mit dem so ausgebildeten Lichtvorhang wird somit eine flexible Mehrbereichsüberwachung ermöglicht.

Gemäß einer besonders vorteilhaften Ausführungsform der Erfindung werden in der Auswerteeinheit für einzelne Bereiche ermittelte Ergebnisse zu komplexen Endergebnissen verknüpft.

Damit wird eine übergeordnete Logikeinheit, das heißt eine weitere Auswerteebene bereitgestellt, in der die einzelnen Auswerteergebnisse für die einzelnen Bereiche zu übergeordneten Informationen zusammengefasst werden können, insbesondere um komplexere Vorgänge und Strukturen erfassen zu können. Diese Zusatzfunktion wird ohne konstruktiven Mehraufwand bereitgestellt, da die Auswerteeinheit, die zur Signal-Auswertung der einzelnen Bereiche eingesetzt wird, auch für diese übergeordneten Auswertungen herangezogen wird.

Gemäß einer ersten Variante werden in der Auswerteeinheit für einzelne Bereiche ermittelte Ergebnisse logisch zu komplexen Endergebnissen verknüpft.

Beispielsweise können Einzelobjekterfassungen in den Bereichen durch UNDbeziehungsweise ODER- Verknüpfungen verknüpft werden. Ein Anwendungsbeispiel hierfür ist die Kontrolle von Objekten, die auf einem mehrspurigen Förderband gefördert werden. Dann kann für jede Spur ein Bereich des Lichtvorhangs definiert werden. Eine Anforderung kann beispielsweise sein, dass auf jeder Spur parallel ein Objekt gefördert wird. Um dies abzuprüfen, können die in den Bereichen erfolgenden Einzelobjekterfassungen mit einer UND-Verknüpfung in der Auswerteeinheit erfasst werden.

Gemäß einer zweiten Variante werden in der Auswerteeinheit für einzelne Bereiche ermittelte Ergebnisse durch arithmetische Operationen verknüpft.

Durch derartige arithmetische Operationen können beispielsweise Objektzählungen vorgenommen werden. Werden beispielsweise auf einem mehrspurigen Förderband parallel Objekte gefördert, kann für jede Spur ein Bereich des Lichtvorhangs definiert werden. Dann können die in den einzelnen Bereichen erkannten Objekte in der Auswerteeinheit parallel gezählt werden. Alternativ können auch die Größen oder Breiten von in den einzelnen Bereichen erfassten Objekten addiert werden.

Gemäß einer weiteren Variante werden in der Auswerteeinheit für einzelne Bereiche ermittelte Ergebnisse zeitabhängig verknüpft.

Mit dieser Ausführungsform ist beispielsweise eine zeitabhängige Objektverfolgung möglich, wobei insbesondere kontrolliert werden kann, ob sich Objekte entlang definierter Bahnen bewegen.

Gemäß einer vorteilhaften Ausgestaltung der Erfindung sind die Auswertungen für Bereiche abhängig von den Ergebnissen der Auswertungen anderer Bereiche.

Bei dieser Ausführung wird eine selbsttätige Adaption des Lichtvorhangs an bestimmte Randbedingungen ermöglicht, das heißt es wird eine Selbstoptimierung des Betriebs des Lichtvorhangs erzielt.

Beispielsweise können durch eine geeignete Anpassung der Auswertung in Abhängigkeit der für einen oder mehrere Bereiche erhaltenen Messergebnisse die Ansprechempfindlichkeiten von Empfängern in definierten Bereichen selbsttätig so eingestellt werden, dass für in diesen Bereichen zu erwartende Objekte eine Objektdetektion mit einer hohen Nachweissicherheit erfolgen kann.

Ein weiteres Anwendungsbeispiel ist die selbsttätige Anpassung der Auswertung des Lichtvorhangs bei zeitabhängigen Objektverfolgungen. Ein Beispiel hierfür ist die Verfolgung der Bahn eines Objekts, für welche gefordert wird, dass ein in einem Bereich erkanntes Objekt diesen Bereich nach einer vorgegebenen Zeitdauer wieder verlassen haben muss.

Die Auswertung in der Auswerteeinheit ist dann derart, dass als Reaktion auf eine Erkennung des Objekts in dem jeweiligen Bereich ein Timer gestartet wird. Dann wird die Auswertung für diesen Bereich derart geändert, dass bei Registrieren des Objekts in dem Bereich, nachdem der Timer ein Überschreiten der vorgegebenen Zeitdauer gemeldet hat, eine Alarmmeldung generiert wird.

Gemäß einer vorteilhaften Ausführungsform der Erfindung weist diese eine Sendereinheit mit einer Auswertung von Lichtstrahlen emittierenden Sendern an einem ersten Rand des Überwachungsbereichs auf. Weiterhin weist die Erfindung eine Empfängereinheit mit einer Anordnung von Lichtstrahlen empfangenden Empfängern an einem zweiten, dem ersten Rand gegenüberliegenden Rand des Überwachungsbereichs auf. Dabei bilden jeweils ein Sender und ein diesem gegenüberliegend angeordneter Empfänger ein Sender-/Empfängerpaar.

Die einzelnen Sender-/Empfängerpaare bilden somit einzelne Lichtschranken, deren Lichtstrahlen Strahlachsen definieren, mit denen ein flächiger Überwachungsbereich abgedeckt wird, innerhalb dessen eine Objekterkennung durchgeführt werden kann.

Vorteilhaft weist jeder Bereich eine Anzahl von aufeinanderfolgenden Sender-Empfänger-Paaren auf.

Die Erfindung wird im Folgenden anhand der Zeichnungen erläutert. Es zeigen:
- Figur 1:: Schematische Darstellung eines Ausführungsbeispiels des erfindungsgemäßen Lichtvorhangs.
- Figur 2:: Anwendungsbeispiel für den Lichtvorhang gemäß Figur 1.

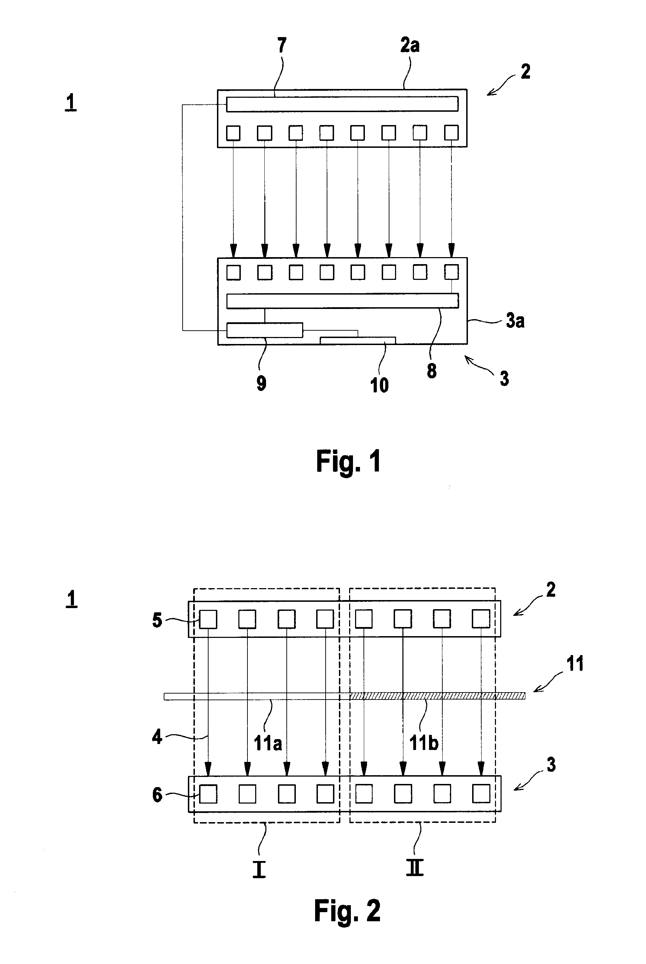

Figur 1 zeigt ein Ausführungsbeispiel des erfindungsgemäßen Lichtvorhangs 1. Der Lichtvorhang 1 umfasst eine Sendereinheit 2 mit einem ersten Gehäuse 2a und eine Empfängereinheit 3 mit einem zweiten Gehäuse 3a. Die Sendereinheit 2 und Empfängereinheit 3 sind an gegenüberliegenden Rändern eines Überwachungsbereichs angeordnet, innerhalb dessen mit dem Lichtvorhang 1 Objekte erfasst werden können.

Im dem Gehäuse 2a der Sendereinheit 2 befindet sich eine Linearanordnung von Lichtstrahlen 4 emittierenden Sendern 5. In dem Gehäuse 3a der Empfängereinheit 3 befindet sich eine der Zahl der Sender 5 entsprechende Anzahl von Lichtstrahlen 4 empfangenden Empfängern 6, die ebenfalls eine Linearanordnung bilden. Die Sender 5 sind von Leuchtdioden, Laserdioden oder dergleichen gebildet. Die Empfänger 6 sind von Photodioden gebildet. Zur Strahlformung der Lichtstrahlen 4 können den Sendern 5 nicht dargestellte Sendeoptiken nachgeordnet sein. Zur Fokussierung der Lichtstrahlen 4 auf die Empfänger 6 können diesen nicht dargestellten Empfangsoptiken vorgeordnet sein.

Jedem Sender 5 ist, wie aus Figur 1 ersichtlich, ein gegenüberliegend angeordneter Empfänger 6 so zugeordnet, dass bei freiem Überwachungsbereich die Lichtstrahlen 4 dieses Senders 5 auf diesen zugeordneten Empfänger 6 treffen. Damit bilden diese Sender 5 und Empfänger 6 ein Sender-/Empfängerpaar und eine sogenannte Strahlachse des Lichtvorhangs 1 aus. Im vorliegenden Fall sind acht derartige Strahlachsen vorgesehen. Die Anzahl der Strahlachsen bei dem Lichtvorhang 1 kann variieren. Auch sind Anordnungen möglich, bei denen die Lichtstrahlen 4 eines Senders 5 auf mehrere Empfänger 6 treffen.

In der Sendereinheit 2 befindet sich eine erste Steuereinheit 7 zur Steuerung und Aktivierung der Sender 5. In der Empfängereinheit 3 befindet sich eine zweite Steuereinheit 8 zur Steuerung und Aktivierung der Empfänger 6. Die Steuereinheiten 7, 8 bestehen im vorliegenden Fall aus Schieberegisteranordnungen, die von einer Rechnereinheit 9 der Empfängereinheit 3 neutral gesteuert werden. Diese Rechnereinheit 9 bildet zugleich eine Auswerteeinheit, in der zur Objekterfassung die an den Ausgängen der Empfänger 6 anstehenden Empfangssignale ausgewertet werden. Mit der Auswerteeinheit werden Ausgänge einer Ausgangsschaltung 10 angesteuert, um aus den Empfangssignalen gewonnene Auswertesignale auszugeben.

Mit der Rechnereinheit 9 und den Steuereinheiten 7, 8 werden die einzelnen Sender-/Empfängerpaar zyklisch und einzeln nacheinander aktiviert, das heißt in einem Messzyklus werden alle Sender-/Empfängerpaare einmal aktiviert.

In einem Konfigurationsvorgang vor einer Inbetriebnahme des Lichtvorhangs 1 erfolgt eine Einteilung der Sender-/Empfängerpaare in unterschiedliche Bereiche, wobei die Größen und die Anzahl der Bereiche variabel vorgegeben werden können. Diese Bereiche können generell auch überlappend ausgebildet sein. Figur 2 zeigt eine Einteilung der Sender-/Empfängerpaare in zwei gleich große Bereiche I, II, wobei der erste Bereich I die ersten vier Sender-/Empfängerpaare und der zweite Bereich II die letzten vier Sender-/Empfängerpaare umfasst.

In dem Konfigurationsvorgang können für die einzelnen Bereiche unterschiedliche Parametersätze und insbesondere unterschiedliche Arten der Auswertung vorgegeben werden.

Die Objekterfassung im Überwachungsbereich erfolgt in der Auswerteeinheit generell durch eine Amplitudenbewertung, insbesondere eine Schwellwertbewertung der Empfängersignale der Empfänger 6. In dem Konfigurationsvorgang können die Höhen und die Anzahl der Schwellwerte als Parameter vorgegeben werden, um so die Nachweisempfindlichkeiten für die einzelnen Bereiche separat vorzugeben.

Weitere vorgebbare Parameter sind beispielsweise Mindestgrößen von zu erkennenden Objekten, sowie zeitabhängige Größen, wie die Vorgaben von Sollzeiten, innerhalb derer Objekte erkannt werden sollen. Auch können Sollkonturen von Objekten vorgegeben werden, die in einzelnen Bereichen erkannt werden sollen.

Weiterhin kann die Art der Signalauswertung für jeden Bereich vorgegeben werden, wobei insbesondere für die einzelnen Bereiche die Ausgangssignale, die bei der Objekterfassung generiert werden, vorgegeben werden können. Schließlich können im Konfigurationsvorgang bestimmte Verknüpfungen von Ausgangssignalen für einzelne Bereiche vorgegeben werden, um so aus diesen komplexe Endergebnisse zu erzeugen.

Bei dem Ausführungsbeispiel gemäß Figur 2 ist der Lichtvorhang 1 in einer vertikalen Ebene orientiert. In einer horizontalen Ebene liegend wird eine Folie 11 durch den vom Lichtvorhang 1 erfassten Überwachungsbereich durchbewegt. Die Folie 11 besteht aus zwei unterschiedlich transparenten Teilsegmenten 11a, 11b. In beiden Teilsegmenten 11a, 11b befinden sich Löcher, die mit dem Lichtvorhang 1 erfasst werden. Lichtstrahlen 4, die die Löcher durchsetzen, werden weniger geschwächt als die auf die Folie 11 auftreffenden Lichtstrahlen 4. Durch eine Schwellwertbewertung der Empfangssignale der Empfänger 6 können daher die Löcher von dem Folienmaterial unterschieden und detektiert werden.

Das erste Teilsegment 11a der Folie 11 wird mit den Sender-/Empfängerpaaren des ersten Bereichs I des Lichtvorhangs 1 erfasst. Das zweite Teilsegment 11b der Folie 11 wird mit den Sender-/Empfängerpaaren des zweiten Bereichs II des Lichtvorhangs 1 erfasst. Da die Teilsegmente 11a, 11b unterschiedliche Lichtdurchlässigkeiten aufweisen, werden zur Detektion der Löcher für die Bewertung der Empfangssignale der Empfänger 6 der beiden Bereiche I, II im Konfigurationsvorgang unterschiedliche Schwellwerte vorgegeben. Weiterhin wird im Konfigurationsvorgang die Auswertung so definiert, dass in der Auswerteeinheit für jeden Bereich I, II ein separates Objektfeststellungssignal generiert wird. Dabei wird für jeden Bereich I, II als Objektfeststellungssignal eine Objektmeldung ausgegeben, wenn in diesem ein Loch detektiert wird.

Weiterhin wird in dem Konfigurationsvorgang eine übergeordnete Auswertung derart definiert, dass die Objektfeststellungssignale der beiden Bereiche I, II miteinander verknüpft werden. Eine solche Verknüpfung kann beispielsweise eine UND Verknüpfung sein, wenn gefordert wird, dass immer zwei Löcher in beiden Bereichen I, II gleichzeitig erkannt werden müssen. Alternativ kann die Verknüpfung in einer Zählfunktion bestehen, so dass die in den beiden Bereichen I, II detektierten Löcher gezählt werden.

### Bezugszeichenliste

- (1): Lichtvorhang
- (2): Sendereinheit
- (2a): Gehäuse
- (3): Empfängereinheit
- (3a): Gehäuse
- (4): Lichtstrahlen
- (5): Sender
- (6): Empfänger
- (7): Steuereinheit
- (8): Steuereinheit
- (9): Rechnereinheit
- (10): Ausgangsschaltung
- (11): Folie
- (11a): Teilsegment
- (11b): Teilsegment
- I): Bereich I
- II): Bereich II

## Patentansprüche

1. Lichtvorhang (1) zur Erfassung von Objekten innerhalb eines Überwachungsbereichs, mit einer Anordnung von Lichtstrahlen (4) emittierenden Sendern (5), mit einer Anordnung von Lichtstrahlen (4) empfangenden Empfängern (6), und mit einer Auswerteeinheit, in welcher in Abhängigkeit von Empfangssignalen an den Ausgängen von Empfängern (6) Objektfeststellungssignale generiert werden, **dadurch gekennzeichnet, dass** der Lichtvorhang (1) in Bereiche mit jeweils einer vorgegebenen Anzahl von Sendern (5) und Empfängern (6) unterteilt ist, wobei die einzelnen Bereiche durch separate Parametrierungen individuell einstellbar sind, und wobei für die einzelnen Bereiche in der Auswerteeinheit eine separate Auswertung erfolgt.

2. Lichtvorhang (1) nach Anspruch 1, **dadurch gekennzeichnet, dass** in der Auswerteeinheit für einzelne Bereiche separate Objektfeststellungssignale generiert werden.

3. Lichtvorhang (1) nach einem der Ansprüche 1 oder 2, **dadurch gekennzeichnet, dass** in der Auswerteeinheit für einzelne Bereiche ermittelte Ergebnisse zu komplexen Endergebnissen verknüpft werden.

4. Lichtvorhang (1) nach Anspruch 3, **dadurch gekennzeichnet, dass** in der Auswerteeinheit für einzelne Bereiche ermittelte Ergebnisse logisch zu komplexen Endergebnissen verknüpft werden.

5. Lichtvorhang (1) nach Anspruch 3, **dadurch gekennzeichnet, dass** in der Auswerteeinheit für einzelne Bereiche ermittelte Ergebnisse durch arithmetische Operationen verknüpft werden.

6. Lichtvorhang (1) nach Anspruch 3, **dadurch gekennzeichnet, dass** in der Auswerteeinheit für einzelne Bereiche ermittelte Ergebnisse zeitabhängig verknüpft werden.

7. Lichtvorhang (1) nach einem der Ansprüche 1 bis 6, **dadurch gekennzeichnet, dass** die Auswertungen für Bereiche abhängig von den Ergebnissen der Auswertungen anderer Bereiche sind.

8. Lichtvorhang (1) nach einem der Ansprüche 1 bis 7, **dadurch gekennzeichnet, dass** dieser eine Sendereinheit (2) mit einer Auswertung von Lichtstrahlen (4) emittierenden Sendern (5) an einem ersten Rand des Überwachungsbereichs aufweist, und dass dieser eine Empfängereinheit (3) mit einer Anordnung von Lichtstrahlen (4) empfangenden Empfängern (6) an einem zweiten, dem ersten Rand gegenüberliegenden Rand des Überwachungsbereichs aufweist, wobei jeweils ein Sender (5) und ein diesem gegenüberliegend angeordneter Empfänger (6) ein Sender-/Empfängerpaar bilden.

9. Lichtvorhang (1) nach Anspruch 8, **dadurch gekennzeichnet, dass** jeder Bereich eine Anzahl von aufeinanderfolgenden Sender-/Empfängerpaaren aufweist.

10. Lichtvorhang (1) nach einem der Ansprüche 1 bis 9, **dadurch gekennzeichnet, dass** die Anzahl und die Größen der Bereiche variierbar sind.
